# FASCICULE DE BREVET EUROPEEN

(11) **EP 2 130 031 B1**
(45) Date de publication et mention de la délivrance du brevet: **16.05.2012**
(21) Numéro de dépôt: 08775733.2
(22) Date de dépôt: 21.03.2008
(51) Int. Cl.: G01N 21/952, G01N 21/95

(54) **DISPOSITIF DE CONTROLE VISUEL AUTOMATISE**
AUTOMATISIERTE SICHTPRÜFUNGSVORRICHTUNG
AUTOMATED VISUAL CHECKING DEVICE

(30) Priorité: 26.03.2007 FR 0754027
(43) Date de publication de la demande: 09.12.2009
(73) Titulaire: Proditec, 33600 Pessac (FR)
(72) Inventeur: MAURIN, Denis, F-33114 Le Barp (FR)
(74) Mandataire: Cenatiempo, Julie Adeline Anne
(86) Numéro de dépôt international: PCT/FR2008/050493
(87) Numéro de publication internationale: WO 2008/132389

(56) Documents cités:
- WO-A-99/04245
- GB-A- 977 059
- GB-A- 2 297 628
- JP-A- 2 092 168
- JP-A- 2001 208 520
- US-A- 4 410 278
- US-A- 5 286 980
- US-A1- 2002 109 094

## Description

La présente invention est relative à un dispositif de contrôle visuel automatisé, plus particulièrement à un dispositif permettant le contrôle de la totalité de la paroi longitudinale extérieure d'un produit de forme allongée.

Dans de nombreuses industries : plastique et caoutchouc, pharmaceutique, métallurgique, automobile..., les systèmes de contrôle utilisent des technologies de pointe pour contrôler la qualité des produits et rejeter les produits présentant des défauts.

Parmi les différents types de contrôle pouvant être réalisés, le contrôle visuel est industriellement intéressant car il s'agit d'un contrôle non destructeur.

Le document JP2092168 (figures 1, 6-7) divulgue un dispositif de contrôle visuel automatisé de produits (100) comprenant des moyens de guidage (12, 52), une fente (10), des moyens de contrôle visuel (4) et deux surfaces de réflexion 3 derrière le lieu de passage des produits (100). Les deux miroirs 3, qui sont situés à la gauche, respectivement à la droite de la ligne centrale des moyens de guidage servent à réfléchir la lumière venant de la surface inférieure des produits vers la caméra 4.

Le dispositif de contrôle visuel, objet de la présente invention, doit ainsi permettre de vérifier la qualité de tous les produits d'un lot de fabrication, et non se limiter au contrôle statistique de quelques échantillons de produits prélevés dans ledit lot de fabrication.

Le contrôle qualité est bien souvent l'ultime étape de vérification des produits avant conditionnement et expédition aux clients. In est donc nécessaire que le contrôle soit effectué avec la plus grande rigueur afin de rejeter tous les produits ne satisfaisant pas aux critères de qualité imposés.

De plus, les cadences de production augmentant régulièrement grâce à l'optimisation des moyens de production et à l'amélioration continue des procédés de production, il est inconcevable que le rendement d'une chaîne de fabrication soit limité par le dispositif de contrôle visuel situé dans ladite chaîne.

Les industriels, en particulier ceux du secteur pharmaceutique, sont à la recherche de dispositifs de contrôle visuel capables de répondre aux exigences de leurs cahiers des charges, portant notamment sur de grandes cadences de production et sur une haute fiabilité du contrôle de la qualité des produits de chaque lot de fabrication.

L'automatisation du contrôle visuel est une solution qui permet aujourd'hui la réalisation de dispositifs de contrôle visuel susceptibles de suivre l'augmentation des cadences de production tout en assurant un contrôle fiable des produits en série et leur rejet si nécessaire.

De manière à pouvoir être inspectés en série, les produits issus d'un lot de fabrication défilent généralement dans le champ de moyens de contrôle visuel grâce à des moyens de guidage permettant de les faire défiler de manière sensiblement continue.

Lors du passage de chaque produit d'un lot de fabrication dans le champ des moyens de contrôle visuels, un dispositif de contrôle visuel automatisé doit permettre d'inspecter la totalité de la surface extérieure du produit, sans quoi le contrôle visuel ne saurait être total.

De nombreux dispositifs ont été conçus pour permettre l'inspection de la totalité de la surface extérieure d'un produit lors de son passage dans le champ des moyens de contrôle visuel, cependant ces dispositifs multiplient généralement les moyens de contrôle visuels, tel une caméra, et/ou les moyens de changement d'orientation dudit produit.

La conception d'un dispositif de contrôle visuel automatisé est directement liée aux formes des produits à inspecter et aux critères qualité imposés.

L'invention s'attache tout particulièrement à l'inspection de produits P de forme allongée, c'est-à-dire au moins aussi long que large, présentant au moins un axe longitudinal 10 et central, lesdits produits P défilant selon une direction sensiblement parallèle à leur axe longitudinal 10.

L'axe longitudinal 10 est considéré comme central lorsqu'il passe sensiblement au centre de toute section effectuée dans ledit produit P de forme allongée.

Plus précisément encore, l'invention est relative à l'inspection de la totalité de la paroi 12 longitudinale extérieure d'un produit P, c'est-à-dire la paroi reliant les deux surfaces 14 situées à chaque extrémité 16 d'un produit P.

Chaque surface 14 située à l'une des extrémités 16 d'un produit P peut être plane, bombée, hémisphérique, creuse ou de toute autre forme.

L'inspection desdites surfaces 14 situées aux extrémités d'un produit P de forme allongée n'intéresse pas l'invention, elle peut être facilement mise en oeuvre avec des moyens connus de l'homme du métier.

En revanche, l'inspection de la totalité de la paroi 12 longitudinale extérieure de produits P de forme allongée est plus difficile à réaliser, notamment dans le cas relatif à la présente invention où lesdits produits P de forme allongée défilent de manière rapide et sensiblement continue pour suivre les cadences de production imposées en amont de la chaîne de fabrication, plusieurs dizaines par seconde pour donner un ordre d'idées.

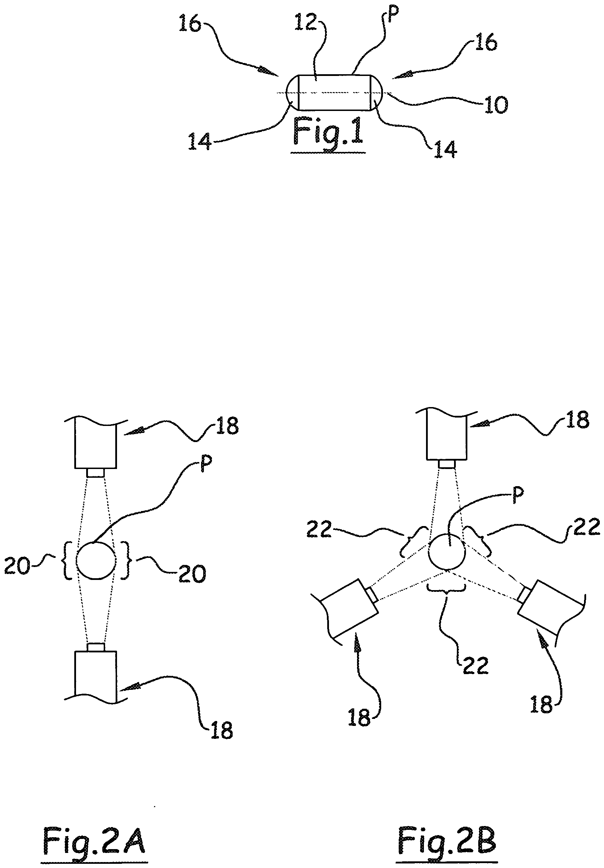

Une première conception de l'art antérieur, illustrée en figure 2A, pour inspecter la totalité de la paroi 12 longitudinale extérieure de produits P de forme allongée consiste à faire défiler lesdits produits P de manière sensiblement continue dans le champ de moyens de contrôle visuel 18, notamment deux caméras disposées face à face et entre lesquelles passe le produit P à inspecter. Cette première conception de l'art antérieur permet d'inspecter un produit P à partir de seulement deux prises de vue.

Cette première solution ne permet pas une inspection optimale de la totalité de la paroi 12 longitudinale extérieure des produits P. En effet, la paroi 12 d'un produit P peut présenter des zones 20 trop inclinées pour se présenter de manière appropriée dans le champ des moyens de contrôle visuel 18 et donc être inspectées correctement à partir de seulement deux vues dudit produit.

Une deuxième conception de l'art antérieur, illustrée en figure 2B, propose de disposer trois caméras à environ 120 degrés chacune l'une de l'autre pour permettre l'inspection de la totalité de la paroi 12 longitudinale extérieure de produits P de forme allongée. Cette disposition permet de créer des zones de recouvrement 22 permettant d'inspecter correctement la totalité de la paroi 12 longitudinale extérieure d'un produit P à partir de trois vues dudit produit. Cependant, cette deuxième conception de l'art antérieur possède l'inconvénient majeur de nécessiter trois caméras, complexifiant le dispositif de contrôle et multipliant les coûts de réalisation et d'entretien ainsi que les risques de défaillance.

Selon une troisième conception de l'art antérieur, notamment utilisée dans le dispositif décrit dans le brevet JP-02092168, le produit à contrôler est mis en rotation afin de permettre l'inspection de la totalité de sa paroi extérieure. Pour une application industrielle, notamment une application à une chaîne de fabrication de produits pharmaceutiques, il est considéré qu'un contrôle de produits P en mouvement et défilant sans moyens de guidage précis peut abaisser la fiabilité dudit contrôle ainsi que la cadence de produits inspectés.

Par conséquent, la présente invention ne concerne pas les dispositifs ou procédés de contrôle visuel automatisé selon lesquels les produits P ne sont pas maintenus lors de leur passage dans le champ des moyens de contrôle visuel.

Aussi, la présente invention vise à pallier les inconvénients de l'art antérieur en proposant un dispositif de contrôle visuel automatisé permettant l'inspection de la totalité de la paroi longitudinale extérieure de produits de forme allongée, lesdits produits étant maintenus lors de leur passage dans le champ des moyens de contrôle visuel et les moyens de contrôle visuel utilisés à cet effet se limitant à seulement une caméra.

A cet effet, l' invention a pour objet un dispositif de contrôle visuel automatisé de produits P, notamment des produits de forme allongée, présentant au moins un axe longitudinal et défilant de manière sensiblement continue selon une direction sensiblement parallèle à leur axe longitudinal, des moyens de guidage maintenant les produits P lors de leur passage dans le champ de moyens de contrôle visuel, ledit dispositif de contrôle visuel automatisé étant caractérisé en ce que les moyens de guidage, maintenant les produits P sensiblement immobiles durant le contrôle visuel, comprennent au moins une fente alignée avec au moins une surface de réflexion disposée dans le champ des moyens de contrôle visuel derrière le lieu de passage des produits P.

D'autres caractéristiques et avantages ressortiront de la description qui va suivre de l'invention, description donnée à titre d'exemple uniquement, en regard des dessins annexés sur lesquels :
- la figure 1 est une représentation d'un produit P à contrôler,
- les figures 2A et 2B sont des représentations schématiques d'une première et d'une deuxième conception d'un dispositif de contrôle visuel automatisé selon l'art antérieur,
- les figures 3A et 3B sont des représentations schématiques d'un premier mode de réalisation d'un dispositif de contrôle visuel automatisé selon l'invention,
- la figure 4 est une représentation schématique d'un deuxième mode de réalisation d'un dispositif de contrôle visuel automatisé selon l'invention,
- la figure 5 est une représentation schématique d'un troisième mode de réalisation d'un dispositif de contrôle visuel automatisé selon l'invention,
- la figure 6 est une vue de détail d'un dispositif de contrôle visuel automatisé selon un mode de réalisation préféré de l'invention,
- la figure 7 est une vue générale d'un dispositif de contrôle visuel automatisé selon un mode de réalisation préféré de l'invention,
- la figure 8 est une vue d'un poste de contrôle de production intégrant un dispositif de contrôle visuel automatisé selon l'invention.

Comme illustré en figure 1, l'invention est relative à un dispositif de contrôle visuel automatisé 24 de produits P possédant une forme allongée, c' est-à-dire au moins aussi long que large, présentant au moins un axe longitudinal 10 et central. L'axe longitudinal 10 est dit central car passant sensiblement au centre de toute section effectuée dans ledit produit P de forme allongée.

Le dispositif de contrôle visuel automatisé 24 qui va maintenant être décrit est plus particulièrement adapté à l'inspection de la totalité de la paroi 12 longitudinale extérieure des produits P, c'est-à-dire la paroi reliant les deux surfaces 14 situées à chaque extrémité 16 d'un produit P.

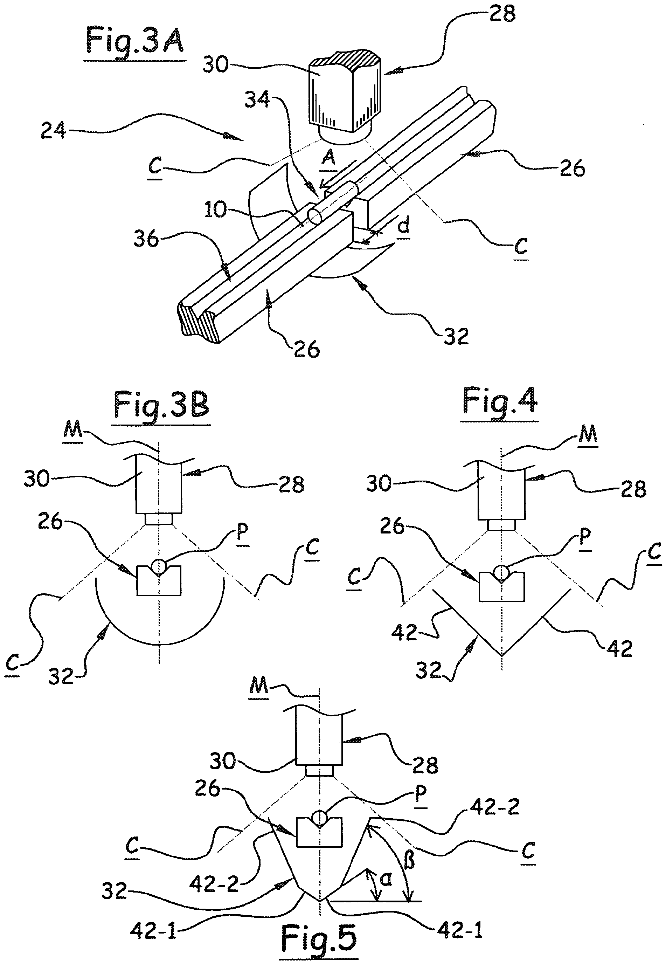

Plus particulièrement, le dispositif de contrôle visuel automatisé 24 permet le contrôle de produits P défilant de manière sensiblement continue selon une direction A, illustrée par une flèche sur la figure 3A, sensiblement parallèle à leur axe longitudinal 10.

Cependant, l'invention couvre aussi les utilisations du dispositif de contrôle visuel automatisé pour l'inspection de produits possédant des formes différentes ou pour l'inspection d'une ou plusieurs autres parois ou surfaces de produits défilant selon une direction de défilement quelconque.

Chaque surface 14 située à l'une des extrémités 16 d'un produit P peut être plane, bombée, hémisphérique, creuse ou de toute autre forme.

L'inspection desdites surfaces 14 situées aux extrémités d'un produit P de forme allongée peut être facilement mise en oeuvre par un poste de contrôle de production intégrant un dispositif de contrôle visuel automatisé 24 selon l'invention et permettant les inspections en série desdites surfaces 14 et de la paroi 12 longitudinale de produits P est donnée en fin de description.

Comme illustré en figure 3A et 3B, un dispositif de contrôle visuel automatisé 24 selon la présente invention comprend des moyens de guidage 26 maintenant les produits P lors de leur passage dans le champ C de moyens de contrôle visuel 28, ledit champ C étant indiqué en traits interrompus sur les figures.

Lesdits moyens de guidage 26 maintiennent les produits P sensiblement immobiles durant le contrôle visuel afin d'assurer la fiabilité dudit contrôle.

Ces moyens de contrôle visuel 28 peuvent utiliser différentes technologies permettant la capture d'images des produits P, cependant ils doivent impérativement pouvoir s'adapter à des cadences de production supérieure à trente produits P à inspecter par seconde, pour donner un ordre d'idées.

En raison de l'application dudit dispositif de contrôle visuel automatisé 24 à des produits P défilant dans leur champ C de vision, les moyens de contrôle visuels 28 comprennent au moins une caméra linéaire 30. Ce type de caméra, qui peut posséder des niveaux de performance élevés et de grandes possibilités d'adaptation, est particulièrement adapté au contrôle de production d'objets, tels les produits P, en défilement dans son champ de vision.

Selon un mode de réalisation préféré du dispositif de contrôle visuel automatisé 24 selon l'invention, et notamment grâce à la conception des moyens de guidage 26 associés avec au moins une surface de réflexion 32 disposée dans le champ de vision des moyens de contrôle visuels 28 derrière le lieu de passage des produits P, une unique caméra linéaire est utilisée pour l'inspection de la totalité de la paroi 12 longitudinale extérieure desdits produits P. Les moyens de capture d'images sont ainsi réduits au minimum par rapport aux dispositifs de l'art antérieur.

Afin de traiter les images capturées par une caméra linéaire ou tout autre moyen de capture d'images, et donc effectuer le contrôle des produits P, les moyens de contrôle visuel 28 comprennent aussi des moyens de traitement reliés auxdits moyens de capture d'images. Ces moyens de traitement des images capturées, permettant l'automatisation du contrôle visuel par filtrage, peuvent être notamment réalisés à partir de DSP (Digital Signal Processor) accompagnés généralement de convertisseurs et/ou d'adaptateurs du signal transmis. Les DSP sont particulièrement adaptés aux opérations de filtrage et de traitement numérique en temps réel du signal fourni par des moyens de capture d'image. Afin de n'utiliser qu'une seule caméra 30, les moyens de guidage 26 comprennent au moins une fente 34 alignée avec au moins une surface de réflexion 32 disposée dans le champ C des moyens de contrôle visuel 28 derrière le lieu de passage des produits P. Ladite fente 34 permet à la partie cachée des produits P d'être réfléchie par la surface de réflexion 32 lors du passage desdits produits P au-dessus de la fente 34.

La partie cachée des produits P est définie comme la portion de la paroi 12 longitudinale extérieure desdits produits P que les moyens de contrôle visuel 28 ne peuvent voir directement ou de manière suffisamment précise dans leur champ C de vision lors de leur passage.

La fente 34 est un évidement partiel ou total des moyens de guidage 26 sur une distance d située dans la direction A de défilement des produits P. Ladite distance d est sensiblement inférieure à la longueur de la paroi longitudinale extérieure 12 des produits P à inspecter. La fente 34, d'une distance d de quelques millimètres pour donner un ordre de grandeur, permet à la partie cachée des produits P de se réfléchir sur la surface de réflexion 32 et donc à une image de ladite partie cachée des produits P d'être capturée par les moyens de contrôle visuels 28.

A cet effet, ladite surface de réflexion 32, au moins une, est disposée dans le champ des moyens de contrôle visuel 28 et de préférence sensiblement orientée face auxdits moyens de contrôle visuel.

Les moyens de guidage 26 des produits P, possédant une forme allongée et présentant au moins un axe longitudinal 10, se présentent de préférence sous la forme d'une glissière 36 comprenant aux moins deux faces de guidage 38 sensiblement inclinées en forme de V, l'une en face de l'autre.

Lesdites faces de guidage 38 sont sensiblement symétriques par rapport à un plan M médian longitudinal, ledit plan M coupant le champ C des moyens de contrôle visuel 28 en son milieu et étant sensiblement parallèle à la direction de défilement A des produits P. Les faces de guidage 38 sont de dimensions et d'inclinaisons adaptées au guidage et au maintien des produits P à inspecter durant leur passage dans le champ C.

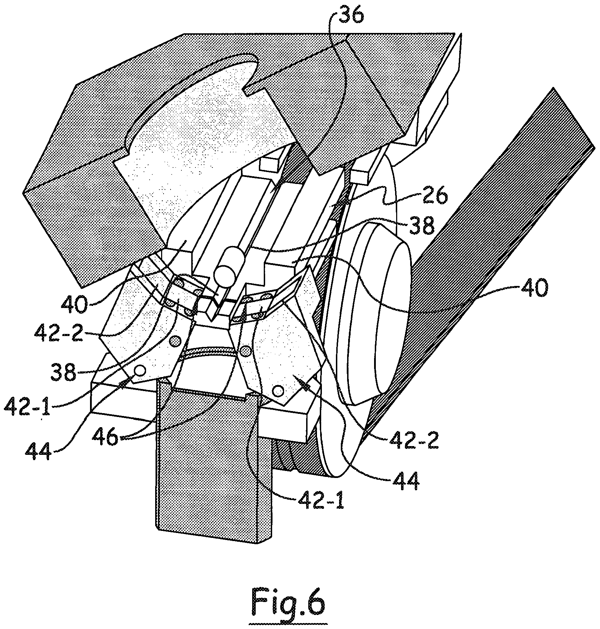

Selon un mode de réalisation préféré du dispositif de contrôle visuel automatisé 24 illustré en figure 6, la glissière 36 est directement usinée dans la masse des moyens de guidage 26, notamment en acier, tout comme les rebords 40 latéraux. Lesdits rebords 40 latéraux permettent simplement d'éviter qu'un produit P ayant accidentellement quitté la glissière 36 ne s'échappe desdits moyens de guidage 26.

Afin d'assurer le défilement des produits P à inspecter, les moyens de guidage 26 sont de préférence sensiblement inclinés par rapport à l'horizontale, leur extrémité la plus basse se situant de manière évidente du côté vers lequel on souhaite faire défiler lesdits produits P. Afin de favoriser le glissement des produits P, les faces de guidage 38 possèdent un état de surface permettant de limiter voire d'éliminer les frottements avec lesdits produits P en mouvement. Selon un premier mode de réalisation, illustré en figures 3A et 3B, d'un dispositif de contrôle visuel automatisé 24 selon l'invention, afin de permettre aux moyens de contrôle visuel 28 d'inspecter la totalité de la paroi 12 longitudinale extérieure des produits P lors de leur passage dans leur champ C, au moins une surface de réflexion 32 de profil droit, concave ou convexe est alignée avec au moins une fente 34 et disposée dans ledit champ C derrière le lieu de passage desdits produits P.

Dans ce premier mode de réalisation, l'inspection d'un produit P est donc réalisée à partir de trois vues dudit produit : une vue directe dudit produit et deux vues indirectes de la partie cachée dudit produit, lesdites vues indirectes étant réfléchies de part et d'autre dudit produit par la surface de réflexion 32. Ce premier mode de réalisation du dispositif selon l'invention permet donc d'obtenir une inspection du produit P à partir de trois vues capturées par une seule caméra linéaire.

Selon un deuxième mode de réalisation, illustré schématiquement en figure 4, d'un dispositif de contrôle visuel automatisé 24 selon l'invention, la, au moins une, fente 34 des moyens de guidage 26 est alignée avec au moins deux surfaces planes 42 de la surface de réflexion 32 disposées dans le champ C des moyens de contrôle visuel 28 derrière le lieu de passage des produits P. Lesdites surfaces planes 42 sont sensiblement inclinées l'une en face de l'autre et orientées de manière à réfléchir une image adaptée de la partie cachée de la paroi longitudinale 12 extérieure des produits P vers les moyens de contrôle visuel 28. Dans ce deuxième mode de réalisation, l'inspection d'un produit P est réalisée à partir d'au moins trois vues dudit produit : une vue directe dudit produit et au moins deux vues indirectes de la partie cachée dudit produit, lesdites vues indirectes étant réfléchies de part et d'autre dudit produit par au moins deux surfaces planes 42 de la surface de réflexion 32. Ce deuxième mode de réalisation du dispositif selon l'invention permet donc d'obtenir une inspection du produit P à partir d'au moins trois vues capturées par une seule caméra linéaire. Selon un troisième mode de réalisation préféré, illustré schématiquement en figure 5 et plus en détails en figure 6, d'un dispositif de contrôle visuel automatisé 24 selon l'invention, la, au moins une, fente 34 des moyens de guidage 26 est alignée avec au moins quatre surfaces planes 42 de la surface de réflexion 32 disposées derrière les produits P dans le champ C des moyens de contrôle visuel 28. Dans ce mode de réalisation optimisé, lesdites surfaces planes 42 sont sensiblement inclinées les unes par rapport aux autres de manière à réfléchir une image encore plus précise de la partie cachée de la paroi longitudinale 12 extérieure des produits P vers les moyens de contrôle visuel 28. Dans ce troisième mode de réalisation préféré, l'inspection d'un produit P est réalisée à partir d'au moins cinq vues dudit produit : une vue directe dudit produit et au moins quatre vues indirectes de la partie cachée dudit produit, lesdites vues indirectes étant réfléchies de part et d'autre dudit produit par au moins quatre surfaces planes 42 de la surface de réflexion 32. Ce troisième mode de réalisation du dispositif selon l'invention permet donc d'obtenir une inspection du produit P à partir d'au moins cinq vues capturées par une seule caméra linéaire, améliorant ainsi considérablement la qualité et la fiabilité du dispositif de contrôle visuel automatisé 24.

Toujours selon un mode de réalisation préféré du dispositif de contrôle visuel automatisé 24, les quatre surfaces planes 42 de la surface de réflexion 32 sont disposées de manière sensiblement symétrique de part et d'autre du plan M médian longitudinal. Ainsi, de chaque côté dudit plan M, deux surfaces planes (42-1,42-2) jointives sont inclinées respectivement d'un angle (α,β) par rapport à l'horizontale. Un support 44 démontable est prévu pour permettre un changement aisé desdites surfaces planes 42 et plus particulièrement afin de modifier aisément leur angle d'inclinaison respectif (α,β) et/ou leur positionnement respectif par rapport aux produits P et aux moyens de contrôle visuel 28.

Afin de réaliser dans les meilleures conditions possibles l'inspection de la partie cachée des produits P, dans son mode de réalisation préféré, un dispositif de contrôle visuel automatisé 24 dispose de moyens de guidage 26 avec des dégagements latéraux 46 de matière de part et d'autre de ladite fente 34 ainsi que de moyens d'éclairage 48 appropriés au procédé de contrôle et aux types de défaut recherché.

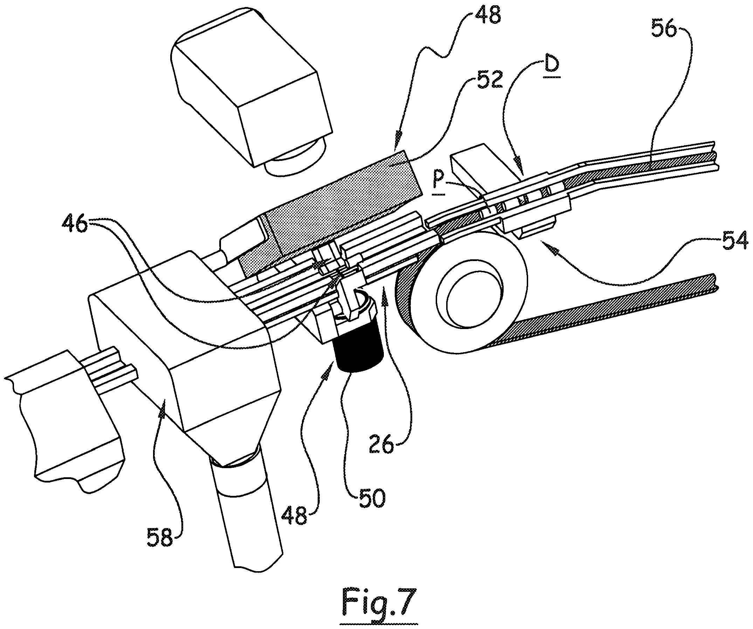

Lesdits dégagements latéraux 46 de matière, illustrés en figure 7, permettent l'optimisation de l'éclairage des produits P passant au niveau de la fente 34, mais ils autorisent, de plus, un positionnement plus rapproché des surfaces planes 42 de la surface de réflexion 32 afin d'améliorer les images reflétées et donc capturées par les moyens de contrôle visuel 28.

Selon le type de défaut contrôlé, les moyens d'éclairage 48 peuvent fournir un éclairage aux caractéristiques différentes.

Ainsi, pour la détection de tâches noires, d'impressions, de variations de couleur ou de dépôts sur les produits P à contrôler, un éclairage diffus sera de préférence choisi. Cet éclairage diffus peut être réalisé par exemple, comme illustré sur les figures 6 et 7, à partir d'une première source lumineuse 50 et d'une deuxième source lumineuse 52, ou bien, à partir d'un éclairage circulaire obtenu à l'aide d'au moins une couronne de LED.

Dans le cas de la détection de revêtements irréguliers, de copeaux ou de fissures sur les produits P à contrôler un éclairage rasant sera de préférence choisi.

Afin d'amener les produits P à contrôler sur les moyens de guidage 26, un dispositif de contrôle visuel automatisé 24 peut intégrer des moyens de convoyage 54 à bande rainurée 56 des produits P en position sensiblement horizontale, lesdits moyens de convoyage 54 se situant bien entendu en amont desdits moyens de guidage 26.

Dans un mode de réalisation préféré de l'invention, afin d'augmenter la cadence d'inspection des produits P, notamment supérieures à trente produits P par seconde, l'inclinaison des moyens de guidage 26 par rapport à l'horizontale peut être agrandie pour favoriser une plus grande vitesse de défilement des produits P à inspecter. Afin d'assurer une transition entre leur position sensiblement horizontale sur les moyens de convoyage 54 et leur position inclinée de défilement sur des moyens de guidage 26 très inclinés, lesdits moyens de convoyage 54 présentent au moins une portion descendante D située à leur extrémité juste en amont desdits moyens de guidage 26, ladite portion D étant d'inclinaison intermédiaire comparativement à l'inclinaison des moyens de guidage 26 par rapport aux moyens de convoyage 54. Cette portion descendante D de transition permet d'éviter le décollement des produits P, décollement qui serait causé par la vitesse d'arrivée des produits P au niveau du changement d'inclinaison entre les moyens de convoyage 54 et de guidage 26.

Dans un mode de réalisation amélioré, cette portion descendante D des moyens de convoyage 54 peut intégrer des moyens d'aspiration permettant d'augmenter davantage la vitesse de défilement des produits P sans décollement. Avantageusement, lesdits moyens d'aspiration intégrés à ladite portion D peuvent même permettre d'homogénéiser et de contrôler la vitesse de défilement des produits P sur les moyens de guidage 26 et donc leur vitesse de passage dans le champ C des moyens de contrôle visuel 28.

Après le contrôle d'un produit P et dans le cas où ledit produit présente un ou plusieurs défauts détectés par les moyens de traitement des moyens de contrôle visuel 28, le dispositif de contrôle visuel automatisé selon l'invention comprend des moyens de rejet 58 des produits P défectueux, situés en aval de la fente 34 des moyens de guidage 26, et commandés par les moyens de traitement des moyens de contrôle visuel 28.

Ces moyens de rejet 58 peuvent consister en des moyens d'expulsion à air comprimé, tel une soufflette, ou tout autre moyen d'expulsion mécanique, tel un doigt rétractable. De plus, les produits P étant susceptibles de défiler à des cadences très élevées, afin d'expulser de manière sélective et précise un produit défectueux, les moyens de contrôle visuel 28 estiment la vitesse de glissement de chaque produit P pour un déclenchement précis des moyens de rejet 58. Par exemple, une variation trop importante de la vitesse de défilement d'un produit P peut être considérée comme un critère de rejet.

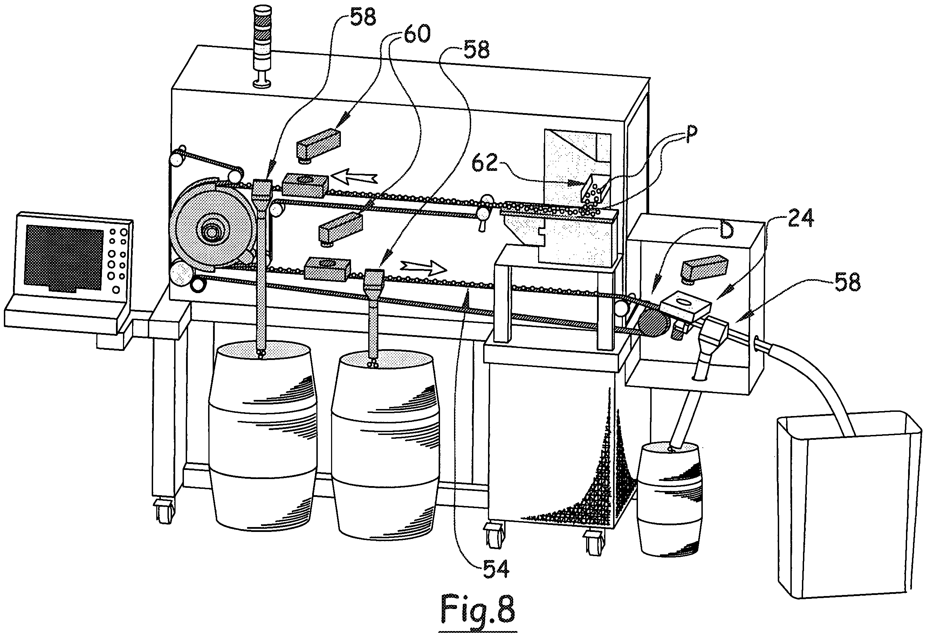

En figure 8 est représenté un poste de contrôle de production intégrant un dispositif de contrôle visuel automatisé 24 selon l'invention afin de mener les inspections en série des surfaces 14 et de la paroi 12 longitudinale extérieure de produits P de forme allongée. A ce titre, ledit poste de contrôle de production intègre aussi deux dispositifs de contrôle visuels 60 desdites surfaces 14 connus de l'homme du métier.

Les produits P à contrôler sont déposés par des moyens d'alimentation 62 sur la bande rainurée 56 des moyens de convoyage 54 du dispositif 24 selon l'invention et sont contrôlés successivement par les dispositifs de contrôle visuel 60 desdites surfaces 14 puis par le dispositif de contrôle visuel automatisé 24 selon l'invention, des moyens de rejet 58 étant aussi prévus entre les dispositifs de contrôle visuels 60 et le dispositif de contrôle visuel automatisé 24.

On remarque que le dispositif 24 selon l'invention permet de limiter à seulement trois caméras le nombre de moyens de capture d'images nécessaire pour assurer l'inspection de la totalité de la périphérie extérieure de produits P de forme allongée. Un tel dispositif est plus avantageux en terme de maintenance et de coût de réalisation par rapport aux dispositifs de l'art antérieur.

## Revendications

1. Dispositif de contrôle visuel automatisé (24) de produit P, notamment des produits de forme allongée, présentant au moins un axe longitudinal (10) et défilant de manière continue selon une direction A sensiblement parallèle à leur axe longitudinal (10), ledit dispositif (24) comprenant des moyens de guidage (26), des moyens de contrôle visuel automatisé (24) et au moins une surface de réflexion (32), lesdits moyens de guidage (26) maintenant les produits P lors de leur passage dans le champ C de moyens de contrôle visuel (28), ledit dispositif de contrôle visuel automatisé (24) est caractérisé en ce quel les moyens de guidage (26) à glissement, maintenant les produits P sensiblement immobiles durant le contrôle visuel, comprennent au moins une fente (34) alignée avec au moins une surface de réflexion (32) disposée dans le champ C des des moyens de contrôle visuel (28) derrière le lieu de passage des produits P glissant en continu sur les moyens de guidage (26), et en ce que la fente (34) est un évidement partiel ou total des moyens de guidage (26) sur une distance d située dans la direction A de défilement des produits P.

2. Dispositif de contrôle visuel automatisé (24) de produites P selon la revendication 1, **caractérisé en ce que** les moyens de contrôle visuel (28) comprennent une caméra (30) linéaire unique pour l'inspection de la totalité de la paroi longitudinale (12) extérieure des produits P.

3. Dispositif de contrôle visuel automatisé (24) de produits P selon la revendication 1 ou 2, **caractérisé en ce que** la, au moins une, surface de réflexion (32) est de profil concave ou convexe.

4. Dispositif de contrôle visuel automatisé (24) de produits P selon la revendication 1 ou 2, **caractérisé en ce que** la, au moins une, fente (34) des moyens de guidage (26) est alignée avec au moins deux surfaces planes (42) de la surface de réflexion (32) disposées dans le champ C des moyens de contrôle visuel (28) derrière le lieu de passage des produits P, lesdites surfaces planes (42) étant sensiblement inclinées l'une en face de l'autre.

5. Dispositif de contrôle visuel automatisé (24) de produits P selon la revendication 1 ou 2, **caractérisé en ce que** la, au moins une, fente (34) des moyens de guidage (26) est alignée avec au moins quatre surfaces planes (42) de la surface de réflexion (32) disposées derrière les produits P dans le champ C des moyens de contrôle visuel (28), lesdites surfaces planes (42) étant sensiblement inclinées les unes par rapport aux autres.

6. Dispositif de contrôle visuel automatisé (24) de produits P selon l'une des revendications 1 à 5, **caractérisé en ce que** les moyens de guidage (26) sont sensiblement inclinés par rapport à l'horizontale.

7. Dispositif de contrôle visuel automatisé de produits P selon l'une des revendications 1 à 6, **caractérisé en ce que** les moyens de guidage (26) se présentent sous la forme d'une glissière (36) comprenant aux moins deux faces de guidage (38) inclinées l'une en face de l'autre, de dimensions et d'inclinaisons adaptées aux produits P.

8. Dispositif de contrôle visuel automatisé (24) de produits P selon l'une des revendications 1 à 7, ledit dispositif de contrôle visuel automatisé (24) intégrant des moyens de convoyage (54) à bande rainurée (56) des produits P situés en amont des moyens de guidage (26), **caractérisé en ce que** lesdits moyens de convoyage (54) présentent au moins une portion descendante D située à leur extrémité juste en amont des moyens de guidage (26), ladite portion D étant d'inclinaison intermédiaire comparativement à l'inclinaison des moyens de guidage (26) par rapport aux moyens de convoyage (54).

9. Dispositif de contrôle visuel automatisé (24) de produits P selon l'une des revendications 1 à 8, **caractérisé en ce qu'**il comprend des moyens de rejet (58) des produits P défectueux, situés en aval de la fente (34) des moyens de guidage (26), et commandés par des moyens de traitement des moyens de contrôle visuel (28).

10. Poste de contrôle de production intégrant un dispositif de contrôle visuel automatisé (24) selon l'une des revendications précédentes.

## Claims

1. Device (24) for automated visual monitoring of products P, in particular products of elongated shape, having at least one longitudinal axis (10) and advancing essentially continuously in a direction A that is essentially parallel to their longitudinal axis (10), whereby said device (24) comprises guiding means (26), automated visual monitoring means (24), and at least one reflective surface (32), whereby said guiding means (26) keep the products P during their passage in the field C by means of visual monitoring (28), said automated visual monitoring device (24) is **characterized in that** the guiding means (26), keeping the products P essentially immobile during the visual monitoring, comprise at least one slot (34) that is aligned with at least one reflective surface (32) that is arranged in the field C of the visual monitoring means (28) behind the site of passage of the products P, sliding continuously on guiding means (26) and whereby the slot (34) is a partial or total recess of the guiding means (26) along a distance d placed in the A advance direction.

2. Device (24) for automated visual monitoring (24) of the products P according to claim 1, wherein the visual monitoring means (28) comprise a single linear camera (30) for the inspection of the entire outside longitudinal wall (12) of the products P.

3. Device (24) for automated visual monitoring of the products P according to claim 1 or 2, wherein at least one reflective surface (32) has a concave or convex profile,

4. Device (24) for automated visual monitoring of products P according to claim 1 or 2, wherein at least one slot (34) of the guiding means (26) is aligned with at least two planar surfaces (42) of the reflective surface (32) arranged in the field C of the visual monitoring means (28) behind the site of passage of the products P, whereby said planar surfaces (42) are essentially tilted facing one another.

5. Device (24) for automated visual monitoring of products P according to claim 1 or 2, wherein at least one slot (34) of the guiding means (26) is aligned with at least four planar surfaces (42) of the reflective surface (32) arranged behind the products P in the field C of the visual monitoring means (28), and whereby said planar surfaces (42) are essentially tilted relative to one another.

6. Device (24) for automated visual monitoring of products P according to one of claims 1 to 5, wherein the guiding means (26) are essentially tilted relative to the horizontal.

7. Device for automated visual monitoring of products P according to one of claims 1 to 6, wherein the guiding means (26) come in the form of a slide (36) that comprises at least two guide faces (38) that are tilted facing one another, with dimensions and slopes suitable for the products P.

8. Device (24) for automated visual monitoring (24) of products P according to one of claims 1 to 7, whereby said automated visual monitoring device (24) integrates means (54) for conveying, with a rabbeted belt (56), products P that are located upstream from the guiding means (26), wherein said conveying means (54) have at least one downflowing portion D that is located at their end just upstream from the guiding means (26), whereby said portion D has an intermediate slope comparable to the slope of the guiding means (26) relative to the conveying means (54),

9. Device (24) for automated visual monitoring of products P according to one of claims 1 to 8, wherein it comprises means (58) for rejecting defective products P, located downstream from the slot (34) of the guiding means (26) and controlled by means for processing visual monitoring means (28).

10. Production monitoring station integrating an automated visual monitoring device (24) according to one of the preceding claims.

## Patentansprüche

1. Vorrichtung für die automatische Sichtkontrolle (24) von Produkten P, insbesondere von länglichen Produkten, die wenigstens eine Längsachse (10) aufweisen und sich kontinuierlich in eine im Wesentlichen zu ihrer Längsachse (10) parallele Richtung A bewegen, wobei die Vorrichtung (24) Führungsmittel (26), Mittel für die automatische Sichtkontrolle (24) und wenigstens eine Reflexionsfläche (32) aufweist, wobei die Führungsmittel (26) die Produkte P bei ihrem Durchlauf durch den Bereich C der Mittel zur Sichtkontrolle (28) halten, wobei die Vorrichtung für die automatische Sichtkontrolle (24) **dadurch gekennzeichnet ist, dass** die zum Gleiten ausgebildeten Führungsmittel (26), die die Produkte P während der Sichtkontrolle im Wesentlichen ruhig halten, wenigstens einen Spalt (34) aufweisen, der auf wenigstens eine Reflexionsfläche (32) ausgerichtet ist, die im Bereich C der Mittel für die Sichtkontrolle (28) hinter der Durchlaufstelle der Produkte P angeordnet ist, die kontinuierlich auf den Führungsmitteln (26) gleiten, und dass der Spalt (34) eine teilweise oder vollständige Ausnehmung der Führungsmittel (26) mit einer Breite d ist, die sich in die Bewegungsrichtung A der Produkte P erstreckt.

2. Vorrichtung für die automatische Sichtkontrolle (24) von Produkten P nach Anspruch 1, **dadurch gekennzeichnet, dass** die Mittel für die Sichtkontrolle (28) eine einzige lineare Kamera (30) für die Inspektion der gesamten äußeren Längswand (12) des Produkts P aufweisen.

3. Vorrichtung für die automatische Sichtkontrolle (24) für Produkte P nach Anspruch 1 oder 2, **dadurch gekennzeichnet, dass** die wenigstens eine Reflexionsfläche (32) ein konkaves oder konvexes Profil hat.

4. Vorrichtung für die automatische Sichtkontrolle (24) von Produkten P nach Anspruch 1 oder 2, **dadurch gekennzeichnet, dass** der wenigstens eine Spalt (34) der Führungsmittel (26) auf wenigstens zwei ebene Oberflächen (42) der Reflexionsfläche (32) ausgerichtet ist, die im Bereich der Mittel für die Sichtkontrolle (28) hinter der Durchlaufstelle der Produkte P angeordnet sind, wobei die ebenen Oberflächen (42) deutlich zueinander geneigt angeordnet sind.

5. Vorrichtung für die automatische Sichtkontrolle (24) von Produkten P nach Anspruch 1 oder 2, **dadurch gekennzeichnet, dass** der wenigstens eine Spalt (34) der Führungsmittel (26) auf wenigstens vier ebene Oberflächen (42) der Reflexionsfläche (32) ausgerichtet ist, die im Bereich C der Mittel für die Sichtkontrolle (28) hinter den Produkten P angeordnet sind, wobei die ebenen Oberflächen (42) deutlich zueinander geneigt angeordnet sind.

6. Vorrichtung für die automatische Sichtkontrolle (24) von Produkte P nach einem der Ansprüche 1 bis 5, **dadurch gekennzeichnet, dass** die Führungsmittel (26) bezüglich der Horizontalen deutlich geneigt sind.

7. Vorrichtung für die automatische Sichtkontrolle von Produkten P nach einem der Ansprüche 1 bis 6, **dadurch gekennzeichnet, dass** die Führungsmittel (26) als Gleitbahn (36) ausgebildet sind, die wenigstens zwei Führungsflächen (38) aufweist, die einander zugeneigt sind und deren Abmessung und Neigung an die Produkte P angepasst sind.

8. Vorrichtung für die automatische Sichtkontrolle (24) von Produkten P nach einem der Ansprüche 1 bis 7, wobei die Vorrichtung für die automatische Sichtkontrolle (24) mit einem Rillenband (56) ausgestattete Fördermittel (54) für die Produkte P umfasst, die im Zulauf der Führungsmittel (26) angeordnet sind, **dadurch gekennzeichnet, dass** die fördermittel (54) wenigstens einen abfallenden Abschnitt D aufweisen, der an ihrem Ende im unmittelbaren Zulaufbereich der Führungsmittel (26) angeordnet ist, wobei der Abschnitt D bezüglich der Fördermittel (54) und im Vergleich zur Neigung der Führungsmittel (26) eine mittlere Neigung aufweist.

9. Vorrichtung für die automatische Sichtkontrolle (24) von Produkten P nach einem der Ansprüche 1 bis 8, **dadurch gekennzeichnet, dass** die Vorrichtung Aussortiermittel (58) für fehlerhafte Produkte P aufweist, die im Nachlaufbereich des Spalts (34) der Führungsmittel (26) angeordnet sind, und von Verarbeitungsmitteln der Mittel für die visuelle Sichtkontrolle (28) gesteuert sind.

10. Einrichtung für die Produktionskontrolle, die eine Vorrichtung für die automatische Sichtkontrolle (24) nach einem der vorhergehenden Ansprüche umfasst.
